# EUROPEAN PATENT SPECIFICATION

(11) **EP 3 081 432 B1**
(45) Date of publication and mention of the grant of the patent: **09.10.2019**
(21) Application number: 16165143.5
(22) Date of filing: 13.04.2016
(51) Int. Cl.: B60P 7/08, B62D 25/20, B61D 17/10, B60R 13/01, B60N 2/02

(54) **FLOORING**
BODENBELAG
PLANCHER

(30) Priority: 13.04.2015 GB 201506246
(43) Date of publication of application: 19.10.2016
(73) Proprietor: BraunAbility UK Limited, Coat Road Martock Somerset TA12 6EY (GB)
(72) Inventor: RICHARDSON, Mark, Martock, Shropshire TA12 6EY (GB)
(74) Representative: Mewburn Ellis LLP

(56) References cited:
- DE-A1- 2 908 823
- DE-U1-202011 051 401
- GB-A- 2 447 503

## Description

The present invention relates to floor structures for use in a vehicle. It also relates to vehicles incorporating such floor structures, and flooring systems for forming such floor structures.

### BACKGROUND

It is well-established to modify vans, buses, minibuses and coaches by installing a floor structure within the vehicle body, on the floor plate of such vehicles.

It is known to form such floor structures from panels incorporating multiple elongate tracks or rails extending along the floor of the load area, usually but not necessarily in parallel, longitudinal arrangements. These rails/tracks include a channel adapted to take complementary securing elements on corresponding vehicle furniture (such as seat fixtures) or passenger restraints (such as seatbelts or wheelchair restraints).

An example of such a structure is presented in WO 99/25601, which shows hollow extruded floor plank profiles including track elements or rails, with the plank elements connected at their edges (e.g. by gluing, welding or interlock) to adjacent plank elements which may be plain (i.e. without securing rail) filler pieces of correspondingly hollow extruded construction, rather than conventional boards. Such an array of extruded planks can be fixed together to form a single floor structure, with dimensions to cover the entire floor area of the vehicle.

Further examples include our "heavy duty rail" and "Innotrax" floor panel products (described in greater detail below), which consist of a hollow extruded floor plank profile, provided with an integral channel for receiving complementary securing elements.

These floor structures are installed on the "floor plate" of the interior of the vehicle. Typical floor plates for van-type road vehicles have swaged sheet metal flooring, with ribs and valleys generally in the longitudinal direction of the vehicle to give it some rigidity. Commonly, the floor structures are added to such vehicle floor plates using glue and bolts.

In "heavy duty" applications it is common for the floor structure to consist of metal securing rails, for securing furniture, attached to the ribs of the vehicle floor plate using bolts, with large spans of relatively weaker material (e.g. plywood) between the rails. This ensures that furniture is held firmly in place in the vehicle body via the securing rails, whilst minimising costs by using cheaper materials for the lower-load-bearing sections of the floor. However, such a floor structure can be complex and time-consuming to install. In particular, the bolts used to hold the securing rails in place must be carefully positioned so as to avoid damage to other vehicle components, and it is often necessary to temporarily remove vehicle parts (such as the fuel tank) during installation of the floor to allow access for, and avoid damage by, bolts. In addition, the position of the securing rails is limited to the ribbed sections of the floor plate, which may not correspond to the positions where furniture is wanted or needed in the vehicle. As a separate issue, this known arrangement can result in a relatively bulky construction, because the plywood is placed on top of a relatively thick metal floor panel (of sufficient thickness to resist deformation by forces applied to furniture attached to the securing rail).

Once such a floor structure has been constructed, it is necessary to secure furniture in place. To secure furniture to such a floor structure, it is necessary to lift the furniture into place on the constructed floor structure, drop the furniture into place in the securing rail or track and then anchor the furniture in place. If the furniture needs to be repositioned, the furniture must be lifted from the track, moved to its new position and secured again. However, this process is relatively laborious, particularly for heavy furniture. Indeed, for certain users of such furniture it may not be possible to move the furniture without assistance, making it complicated to change the position of furniture once it has been installed.

In many instances it is necessary or desirable to provide the furniture, or other equipment in the vehicle, with a suitable power source. For example, users of the vehicle may require power to recharge batteries of wheelchairs or mobile equipment such as laptop computers and data communication for the same. It may also be required to have an alarm or signalling system between a wheelchair location and a common control unit.

Thus, there remains a need to provide floor structures for vehicles which provide greater flexibility in terms of the position and type of furniture which can be accommodated.

### SUMMARY OF THE INVENTION

To address the above problems, a first aspect of the present invention provides a floor structure according to claim 1.

The invention also provides a flooring system according to claim 13.

It should be noted that "primary" and "secondary" when used in relation to the floor panels are used simply as labels, and are synonymous with "first" and "second".

Advantageously, this flooring system provides great flexibility in terms of the types of floor structures which can be constructed. For example, a relatively cheap floor structure can be constructed comprising spans of plywood supported by platform panels attached to primary panels, with the primary panels attached to the vehicle floor. Furthermore, such a floor can include a block of several interconnected primary floor panels, with a platform floor panel connected to one or both sides of the block. Such blocks of primary floor panels can improve the strength of a floor structure.

Such a flooring system also provides advantages over known flooring systems. For example, as described above, in the known flooring system in which securing rails are bolted across adjacent ribs of a vehicle floor plate and plywood sheets span the gap between adjacent rails (such as the systems described in our own earlier application, GB 2321626) the positions of the metal floor panels are limited by the position of the ribs on the vehicle floor. In contrast, in the present invention, a "block" of mechanically interconnected primary and platform panels can be attached to the floor, which means that the exact positioning of individual panels is less important. Furthermore, in the present invention it is possible to attach a block of interconnected primary panels to the vehicle floor, which results in the floor structure being attached more strongly to the floor than would be the case for multiple unconnected panels (because any detaching force is spread across multiple panels). This improved bonding means that the flooring system can be installed on the vehicle floor plate using glue, instead of bolts, which simplifies the installation process (in particular, it means that other vehicle components do not need to be temporarily removed during installation).

Preferably, the top surface of the platform floor panel is stepped so as to have an upper section and a relatively lower section, wherein the lower section extends continuously to an edge of the platform floor panel and provides the platform for supporting a secondary floor panel (e.g. a sheet of plywood) so that it lays flush with the upper section of the top surface; and the primary and platform floor panels are connectable edge-to-edge via said complementary engageable features such that the top surface of the primary floor panel and upper section of the platform floor panel are adjacent (i.e. the upper section of the platform floor panel extends to an edge of the floor panel having said complementary engageable features). Advantageously, this increases the height of the platform floor panel at the edge which is connectable to a primary floor panel, which provides a greater area over which to position the complementary engageble features (allowing for stronger bonding between floor panels).

The primary floor panel and platform floor panel are connectable using the complementary engageable features so that the top surface of the primary floor panel and upper section of the platform floor panel are aligned (i.e. are at the same height). This allows the top surface of the primary floor panel and upper section of the platform floor panel to provide a continuous surface when the primary floor panel and platform floor panel are connected.

Suitably, the upper and lower sections of the top surface of the platform floor panel are connected by a connecting wall. In use, the secondary floor panel abuts at least a portion of this connecting wall.

Preferably, the connecting wall does not include any projecting regions, since this allows a secondary floor panel to be brought into abutment with the connecting wall without requiring any special features on the edge of the secondary floor panel. In particular, it is preferred that the upper section of the top surface of the platform floor panel does not overhang the connecting wall or lower section of the top surface.

Preferably, the upper and lower sections of the top surface are connected by a flat connecting wall because this allows a secondary floor panel having a straight edge (produced, for example, by a saw cut) to be abutted against the connecting wall so as to provide a continuous level floor structure. Suitably, such a flat connecting wall extends continuously from the upper section to the lower section of the top surface of the platform floor panel. Preferably, the connecting wall is perpendicular to both the upper and lower surfaces (i.e. the angle between the upper surface and connecting wall, and angle between the lower surface and connecting wall, is 90°).

The lower section may be flat (i.e. planar), since this provides good support to a flat secondary floor panel whilst spreading the load placed on the platform floor panel and secondary floor panel. The upper section and lower section of the top surface may be parallel.

The width of the platform of the platform floor panel, as a percentage of the top surface of the platform floor panel as a whole, may be, for example, greater than 10%, greater than 20%, greater than 30%, greater than 40%, or greater than 50%. The maximum width of the platform may be, for example, 90%, 80%, 70%, 60% or 50%.

In embodiments in which the top surface of the platform floor panel comprises upper and lower section, the width of the lower section as a percentage of the top surface of the platform floor panel as a whole may be, for example, greater than 10%, greater than 20%, greater than 30%, greater than 40%, or greater than 50%. The maximum width of the lower section may be, for example, 90%, 80%, 70%, 60% or 50%. The width of the lower section may be measured from the edge of the floor panel (on the lower section), to the start of the upper section (which may correspond to the position of the connecting wall).

The height of the platform of the platform floor panel as a percentage of the height of the platform floor panel as a whole (the "platform relative height") may be, for example, 20% or less, 30% or less, 40% or less, 50% or less, 60% or less or 70% or less. The lower limit for the platform relative height may be, for example, 10%, 20% or 30%. For example, the platform relative height may be between 10 to 70%, or 20 to 60%. The height of the platform may be calculated by placing the platform floor panel on a flat surface, and measuring the distance from said flat surface to the highest point of the platform. Similarly, the height of the platform floor panel as a whole may be measured by placing the platform floor panel on a flat surface, and measuring the distance from said flat surface to the highest point of the platform floor panel as a whole.

The platform may have a depth of, for example, 0.5 cm or more, 1.0 cm or more, 1.5 cm or more, 2.0 cm or more, 2.5 cm or more, or 3.0 cm or more. For example, the relative distance between the highest point of the top surface of the platform floor panel and lowest point of the platform of the platform floor panel may be, for example, 0.5 cm or more, 1.0 cm or more, 1.5 cm or more, 2.0 cm or more, 2.5 cm or more, or 3.0 cm or more.

Suitably, the platform of the platform floor panel is distinct from the complementary engageable features of the platform floor panel.

The primary floor panel is connectable to other primary floor panels (i.e., primary floor panels are interconnectable) and to platform floor panels by complementary engageable features. Preferably, the complementary engageable features are mechanical locking mechanism features (e.g. edge interlock formations) provided on one edge of the platform floor panel and both edges of the primary floor panel. In embodiments in which the top surface of the platform floor panel is stepped, the mechanical locking mechanism (e.g. edge interlock formations) is provided on a side of the platform having the upper section of the top surface (and preferably only on that side). When the mechanical locking mechanism is provided on only one side of the platform floor panel, the panel acts as a side-clip, for finishing the edge of the primary floor panel to allow attachment of a secondary floor panel.

Suitable mechanical locking mechanism features include, for example, a tongue and groove or tongue in groove mechanism. Preferably, the mechanical locking mechanism is a snap fit mechanism. Advantageously, such floor panels can be constructed into a floor structure rapidly by "clipping" or "clicking" panels together, desirably by tilting without requiring relative longitudinal movement, and hence can be installed easily and quickly.

To achieve a snap fit mechanism, the primary and platform floor panels may include one or more projections along an edge which snap fit within one or more grooves along the edge of an adjacent panel, such as those present on our "Innotrax" floor panel product. Such projections may be integral to the sides of the panel (e.g. a side wall), or may be formed by a section of the top or base extending beyond a side wall. Similarly, the grooves may be formed in the sides of the panel, or may be formed by a section of the top or base projecting laterally beyond a side (e.g., to form a lip). In such instances, the integrally formed projections and grooves can be referred to as integral edge interlock formations.

Preferably, the primary floor panel is a hollow construction, having a top and a base connected by first and second side walls. Similarly, it is preferred that the platform floor panel is a hollow construction, having a top (preferably a stepped top) and a base, connected by first and second side walls. Advantageously, hollow constructions decrease the weight of the flooring system, and can lead to improved strength. In embodiments in which the primary and/or platform floor panel is hollow, it is preferred that said floor panel(s) includes an internal reinforcing member. This reinforcing member may be a separate part or, more preferably, is integral with the floor panel (i.e., connecting the top and base). Together with the first and/or second side walls, this reinforcing member splits the interior of the floor panel into multiple cavities/compartments/cells. Advantageously, including one or more reinforcing members improves the strength of the floor panel, allowing the panel to be made larger without increasing the thickness of the top, base or side walls.

Preferably, the primary and/or platform floor panel is a plank (i.e., has a plank profile), for example, an elongate extruded plank. A plank-shaped panel is simple to handle and cut, making it relatively easy to build up a floor structure in a desired shape.

Preferably, the primary and/or platform floor panel is/are made from metal, since this results in a strong and robust floor structure. In particular, metal is a good material for attaching furniture and other additional components in the vehicle, due to its strength and ability to be worked (e.g., drilled). A particularly preferred metal is aluminium, since it is strong, lightweight and is readily extruded.

The flooring system may include an anchorage formation for securing furniture to the floor structure. Preferably, the anchorage formation is provided on the top surface of the primary floor panel, either as a separate component or (more preferably) as an integral part of the primary floor panel.

The word "furniture" is used in a general sense to refer to accessories which are added to a vehicle and includes, for example, an anchorage device, a seat, a wheelchair, a bed, a table, or a partition wall.

Preferably, the anchorage formation is an elongate securing rail or track. In such embodiments, it is preferred that the securing rail has a channel or groove (i.e. includes a "securing channel"), enabling the insertion of one or more projections on an item of furniture. For example, securing rails may have a central groove with opposed overhanging edge flanges and a series of scalloped recesses in the flanges, enabling the insertion and locking of fittings having corresponding projections which can be dropped through the recesses, shifted out of alignment with the recesses and locked there so that they cannot be pulled out: see for example our EP-A-709247 and GB2321626. One option, seen in GB2321626 Figs. 1 and 2 is to form the rail as a separate part which attaches to the floor panels, for example by means of a rib on one part which engages with a slot in the other part. Another, preferred option, seen in GB2321626 Figs. 3 and 4 and our "Innotrax" product, is to form the rails as an integral part of a floor panel.

Optionally, in embodiments in which the flooring system includes a securing rail or track, the rail or track may be suitable for receiving an item of furniture such that the furniture can be moved (e.g. slid) along the rail/track (preferably along a substantial length of the securing rail or track) and secured to the rail/track. Unlike conventional flooring systems, this allows furniture to be repositioned relative to the flooring system without requiring the furniture to be "lifted" from the track.

For example, the flooring system may include a furniture conveyor, which an item of furniture can be placed on or attached to, and which is movable along at least a portion of the length of the securing rail/track. Suitably, the securing rail includes a securing channel and the conveyor is positioned within the channel, and moveable (e.g. slideable) along said channel. The conveyor may include one or more wheels or bearings (e.g. ball bearing or roller bearing) on the conveyor itself to aid movement. Additionally or alternatively, the securing rail may include one or more rollers or bearings to aid movement of the conveyor. Preferably, the flooring system comprises a furniture conveyor which includes a wheel which runs within a securing channel.

Furniture may be placed/rested on the conveyor and moved without being secured to the conveyor. Alternatively, the conveyor may be attachable to an item of furniture, or may be an integral part of an item of furniture. Accordingly, the invention also includes a flooring system which further comprises an item of furniture (e.g. a seat, bed or table) resting on or (more preferably) attached to a furniture conveyor (either through attachment means, or by virtue of the conveyor being an integral part of the furniture).

Optionally, the flooring system includes a cable holder for receiving a cable (e.g. wire) for providing, in use, equipment in the vehicle with power and/or signals.

In embodiments in which the flooring system includes an elongate securing channel, it is preferred that the cable holder is provided within the channel. Advantageously, this allows the cable to be easily accessed in a completed floor structure without requiring disassembly of the structure (as would often be required with paths held within a hollow panel), and without leaving the cable/wire exposed to unwanted interference and tampering.

In such embodiments, the cable holder is preferably an elongate pocket provided within the securing channel (most preferably, formed within the inner wall of the securing channel), and extending along at least a portion (at least 10%, at least 25%, at least 50%, at least 75%, at least 90%, preferably all) of the length of the securing channel. The pocket may be an insulated pocket, for example, an electrically insulating pocket. The pocket can have any suitable shape. However, preferably the pocket is shaped so that, in use, rotation of a cable held in the pocket is limited or prevented. For example, the pocket may have a triangular, square, rectangular, or trapezoidal cross-section for receiving a cable having a compatible or the same cross-section.

In a particularly preferred embodiment, the cable holder is for receiving an electrical cable. In such embodiments, it is preferred that the flooring system includes a first cable holder (e.g. a pocket, most preferably an electrically insulating pocket) for receiving a positive electrical wire and a second cable holder (e.g. a pocket, most preferably an electrically insulating pocket) for receiving a negative electrical wire. Such an arrangement allows furniture secured to the securing channel to form an electrical connection to the electrical wires in a simple manner, by providing the furniture with terminals which bridge the positive and negative electrical wires (e.g. one or more conductive pins which contact the wires). In this way, furniture can be supplied with electrical power and electrical signals without needing to be plugged in to a special connector (e.g. a plug socket provided in the surface of the floor structure), and without the need for additional cables to extend from the furniture itself. Preferably, in such embodiments, the securing channel includes a bottom and side walls and the first and second cable holders are provided on opposite side walls.

In embodiments in which the flooring system comprises a furniture conveyor and a cable holder, a preferred arrangement is for the furniture conveyor to be spaced from the cable holder so as to prevent, in use, interference between the conveyor and a cable held in the cable holder. One preferred arrangement involves a securing channel having a raised surface within the channel, wherein the furniture conveyor is movable along the raised surface and the cable holder(s) is/are positioned relatively lower than the raised surface. For example, when the furniture conveyor is a wheel, the securing channel may comprise a ridged section which the wheel is movable along, with one or more cable holders in a side wall below the top of the ridge.

In use, multiple items of furniture can be connected to the same cable. In instances where multiple items are connected to the same cable, specific individual items of furniture can be provided with power and signals by using a suitable control unit. For example, individual or groups of items of furniture connected to the same cable may be assigned a specific conditioning signal (e.g. a digital signal), and may be activated (e.g. to draw power or transmit/receive signals) or deactivated upon supply of the conditioning signal by a control unit (e.g. a digital control unit).

The present invention also includes a flooring system as described above which further comprises a cable (preferably an electrical wire) held in said cable holder(s). In embodiments in which an electrical cable is held in a pocket, it is preferred that the cable includes a conductive surface exposed within the channel. Most preferably, the cable includes a conductive surface extending along the length of the securing rail, since this provides great flexibility in terms of the positions at which equipment can interface (e.g. draw power from) the cable.

Further, the invention includes a flooring system as described above which comprises a cable held in said cable holder(s) and an item of equipment (e.g. furniture) having one or more terminals for interfacing with the cable.

In some embodiments, the floor structure comprises:
an item of furniture;
a floor panel having an elongate securing channel, for securing the item of furniture to the floor panel;
a furniture conveyor (preferably a wheel), positioned within the elongate securing channel for translating the item of furniture within the securing channel; and
anchorage means, for securing the item of furniture to the securing channel.

Preferably, the furniture conveyor is provided on the item of furniture, either as a separate part which is attached to the furniture, or as an integrally formed part of the furniture. The furniture conveyor may be, for example, a wheel provided on the furniture which sits within the securing channel, and is movable along the groove.

Additionally or alternatively, the anchorage means may be provided on the item of furniture, either as a separate part which is attached to the furniture, or as an integrally formed part of the furniture. The anchorage means may be, for example, a fitting comprising one or more projections which lock to the securing channel, e.g. lock within the securing channel.

Most preferably, the furniture conveyor is a wheel provided on the item of furniture which sits within the securing channel, and is movable along the channel, and the anchorage means is a fitting comprising one or more projections which lock within the securing channel.

Advantageously, this provides a simple way of allowing furniture to be positioned within the securing channel and locked in place.

In some embodiments, the primary floor panel comprises:
an elongate securing channel, for securing an item of furniture to the floor panel,
a cable holder provided within the securing channel, for receiving a cable for providing, in use, the item of furniture with power and/or signals. Suitably, the securing channel is provided on the top of the flooring system and is an open channel.

Suitably, the securing channel has a bottom and side walls, and the cable holder is provided in one or both of the side walls of the securing channel. Preferably, the cable is an electrical cable, most preferably an electrical cable having a conductive surface exposed within the securing channel (as described above in relation to the first aspect of the invention).

Suitably, the secondary floor panel of the present invention is a planar sheet of material capable of bearing a load, e.g. bearing the weight of a human. The secondary floor panel may be, for example, a sheet of metal or plywood.

Optionally, the floor structure also includes at least one primary floor panel connected to another primary floor panel by complementary engageable features. Additionally or alternatively, the floor structure may also include a primary floor panel having a platform floor panel connected to two of its edges (opposite edges).

The secondary floor panel is placed on the platform so that the surface of the secondary floor panel lays flush with the top surface of the primary floor panel. Advantageously, this provides a large expanse of level flooring.

Optionally, the structure may include an item of furniture attached to the furniture conveyor.

The floor structures may also comprise a floor-covering material (e.g. vinyl or carpet) e.g. placed over the top surface of the primary, platform and secondary floor panels.

In a further aspect, the present invention provides a vehicle (e.g. a road vehicle, such as a van, bus, minibus or coach) comprising a floor structure according to claim 1.

Installation of a floor structure according to claim 1 may involve attaching a flooring system according to the present invention to a vehicle floor plate using an adhesive, such as glue (e.g. applying glue to the vehicle floor plate and attaching a floor structure according to the third aspect). The method optionally includes the step of applying a floor-covering material over the assembled floor panels.

In another aspect, which is not subject matter of the present invention, a method of manufacturing a platform floor panel according to the present invention is suggested, involving extruding a material (preferably metal, most preferably aluminium) through a die. It is especially preferred to extrude a hollow plank, comprising a top and base connected by first and second side walls.

Unless the context requires otherwise, it will be understood that these proposals may extend to wall-mounted structures. For convenience of description we use the term "floor", but this should interpreted to include (separately) use in non-horizontal contexts.

Although the present invention has been discussed mainly with reference to vehicles, it will be appreciated that the floor structure may find uses in other applications. For example, the floor structure may find use in building applications, such as house building and cabin building. Therefore, the floor panels and structures may be useful in contexts other than vehicles.

### BRIEF DESCRIPTION OF THE FIGURES

Examples of our proposals are now described with reference to the accompanying drawings, in which:

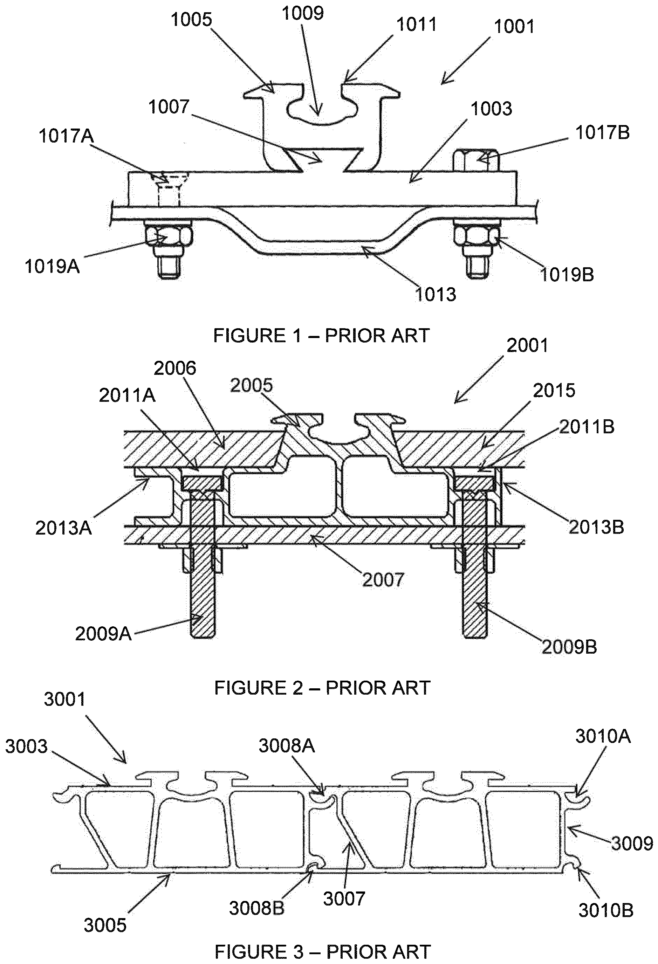

Figure 1 is an end view of a prior art floor panel as shown in GB 2321626;
Figure 2 is a partial cross-sectional view of a floor structure incorporating a prior art floor panel installed on a vehicle floor plate;
Figure 3 is an end view of connected prior art floor panels corresponding to our current "Innotrax" product;

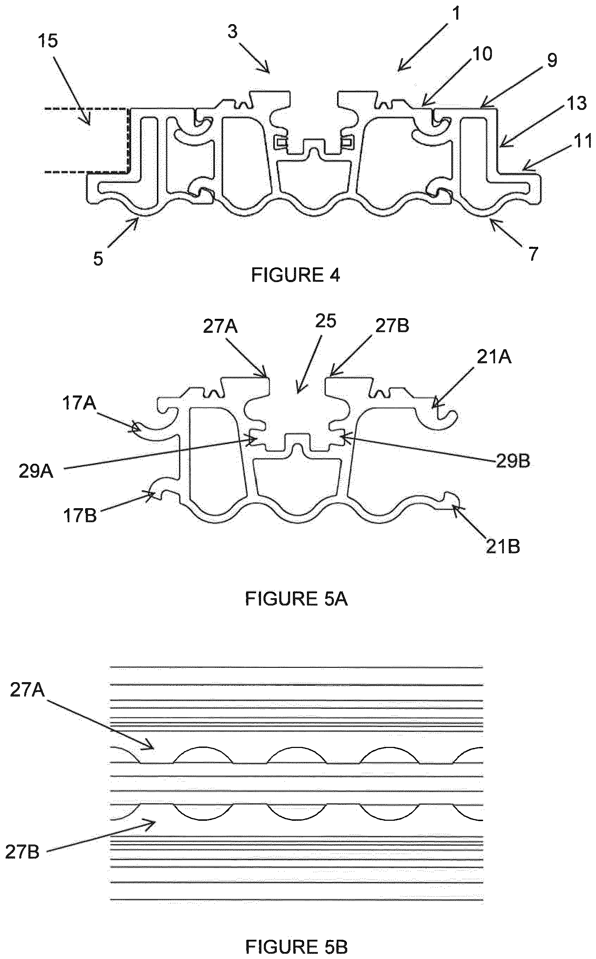

Figure 4 is an end view of a flooring system according to the present invention, having a central primary floor panel flanked by two platform floor panels;
Figure 5A is an end view of the primary floor panel shown in Figure 4;
Figure 5B is a top view of the primary floor panel shown in Figure 4;

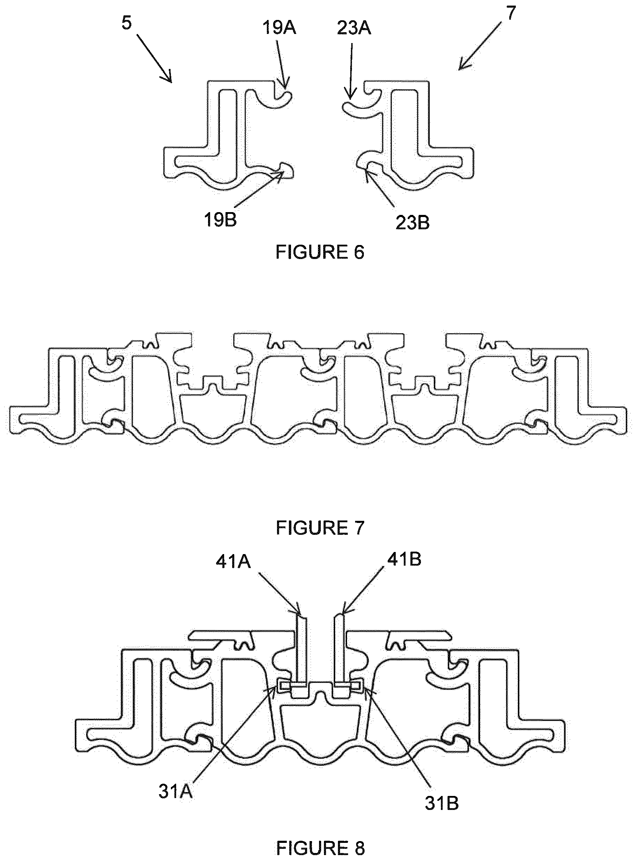

Figure 6 is an end view of the platform floor panels shown in Figure 4;
Figure 7 is an end view of an alternative flooring system having a block of two central primary floor panels flanked by platform floor panels;
Figure 8 is an end view of the flooring system of Figure 4 with electrical terminals from an item of furniture drawing power from electrical cables in the flooring system;

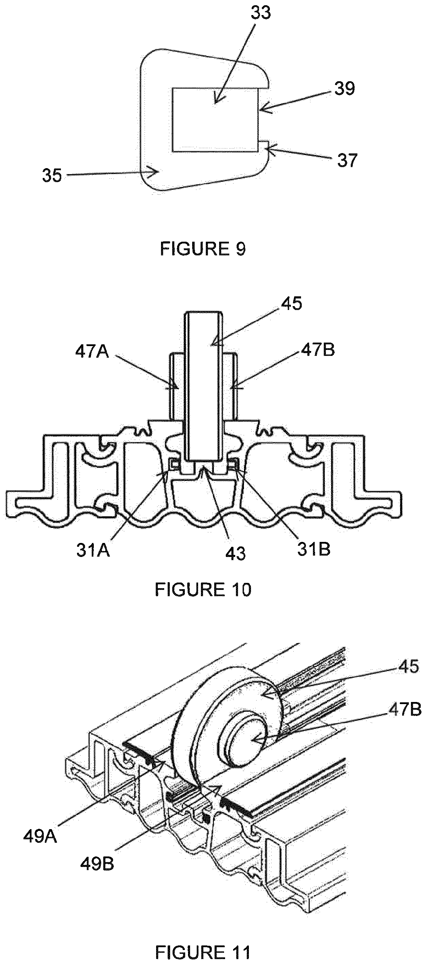

Figure 9 is a close-up end view of the electrical cable shown in Figure 8;
Figure 10 is an end view of the flooring system of Figure 4 with the wheel of an item of furniture positioned within the securing channel; and
Figure 11 is a perspective view of a flooring system according to the present invention with the wheel of an item of furniture positioned within the securing channel.

### DETAILED DESCRIPTION

Figure 1 shows a prior art floor panel 1001, corresponding to that shown in Figure 1 of GB2321626. The panel consists of a solid base plate 1003 connected to a discrete securing rail 1005 via an elongate dovetail join 1007. The securing rail includes a recess 1009 having overhanging lips 1011, which can be used to engage suitable projections on an item of furniture, so as to anchor the furniture in place on the securing rail. The floor panel 1001 is attached to ribbed vehicle floor plate 1013 using bolts 1017A and 1017B and nuts 1019, so that the base plate 1013 spans the valley between two ribs on the vehicle floor plate. To allow such attachment, the installer of the floor must have access to both the topside and underside of the vehicle floor plate, which may necessitate removal of other vehicle components, and may require assistance from a second person. To create a finished floor, sheets of plywood (not shown) are placed in abutment with the securing rail 1005 on the base plate 1003 so as to span the gap between adjacent floor panels 1001.

Figure 2 shows a floor structure incorporating another prior art floor panel 2001, corresponding to our commercially available "heavy duty rail", installed in a vehicle. The floor panel 2001 is a hollow, extruded aluminium plank having a base plate 2003 integrally formed with a securing rail 2005. In the floor structure shown in Figure 2, floor panel 2001 is one of multiple floor panels which have been attached to the vehicle floor plate 2007, and plywood sheets 2006 have been placed on top of the base plate 2003 of the floor panel 2001 in abutment with securing rail 2005, so as to span the gap between adjacent floor panels and form a completed floor. The base plate 2003 is attached to a vehicle floor plate 2007 using bolts 2009A and 2009B, with the bolts accommodated within recesses 2011 A and 2011B so that they lie below the top surface of the base plate, and do not interfere with plywood sheets. As with the floor panel shown in Figure 1, the installer of the floor must have access to both the topside and underside of the vehicle floor plate, which may necessitate removal of other vehicle components, and may require assistance from a second person.

The outer side walls of recesses 2011A and 2011B are provided by C-shaped side wall 2013A and flat side wall 2013B respectively. The side walls are shaped so that, when two like floor panels are brought into abutment edge-to-edge, side walls 2013A and 2013B form a single-walled hollow pocket (which decreases the weight of the flooring per unit area compared to having two flat side walls).

Figure 3 shows two prior art floor panels 3001, corresponding to our current "Innotrax" product, connected together edge-to-edge. Each floor panel is a hollow integrally formed aluminium panel having a top 3003 and base 3005 connected by side walls 3007 and 3009. One side of the panel includes hooks 3008A and 3008B which are able to mechanically lock with complementary hooks 3010A and 3010B projecting from side wall 3009 on the adjacent panel, which allows a floor to be constructed by "snapping" together adjacent panels. The panels are not suited to supporting a further load-bearing panel, such as plywood, because such an additional panel would sit above the top surface 3003, resulting in a non-level floor which users of the vehicle could easily trip over.

Figure 4 shows a flooring system 1 according to the present invention, comprising a central primary floor panel 3 connected edge-to-edge with platform floor panels 5 and 7. Each of the panels is formed from extruded aluminium. The individual components of the flooring system are shown in greater detail in Figures 5A, 5B and 6. Platform panel 7 includes a stepped top surface having an upper section 9, which is level with the edge of top surface 10 of primary floor panel 3. The platform floor panel 7 also includes a relatively lower platform section 11 which provides a flat surface for supporting a sheet of plywood (as shown by dotted outline 15 for platform floor panel 5).

To construct the flooring system shown in Figure 4, projections 17A and 17B on primary panel 3 are made to lock with projections 19A and 19B on platform panel 5. This is achieved by inserting male-hooked projection 19A into the female-curved channel of projection 17A at an oblique angle, and then pivoting the platform floor panel 5 downwards so that projection 19B deforms and "snaps" into the lower groove created by projection 17B. Similarly, projections 21A and 21B on primary panel 3 are made to lock with projections 23A and 23B on platform panel 7 in an analogous manner, by "snapping" the primary panel 3 onto the platform panel 7. It is also possible to interconnect two or more primary floor panels side-by-side (as shown in Figure 7), and to connect platform panels 5 and 7 (not shown).

The flooring system of the present invention can be secured to a vehicle floor plate using a suitable adhesive, often without the need for the use of mechanical fixings, such as bolts. For example, by forming interconnected "blocks" of floor panels, as shown in Figure 7, it is possible to increase the surface area of a given block which is in contact with an adhesive, helping to "spread" any detaching force applied to the floor (which is not possible with the prior art floor panels shown in Figures 1 and 2). Furthermore, in the particular embodiment shown in Figures 4 to 11, the corrugated "wavy" bottom of the floor panels helps to retain glue in the space between the floor panel and vehicle floor plate during installation, by limiting the amount of glue which can be squeezed out of that space.

To secure furniture to the flooring system, the primary floor panel incorporates a central securing channel 25, having overhanging lips 27A and 27B. As shown in Figure 5B, the distance between the overhanging lips 27A and 27B varies along the length of primary floor panel, so as to provide a linear array of recesses (in this case, having a scalloped appearance). This allows furniture to be attached to primary panel 3 by aligning projections on the furniture with the recesses, dropping the projections into the recesses, and then shifting the projections along the panel, out of alignment with the recesses, so that the projections are caught under the narrower section of overhanging lips 27A and 27B.

Primary floor panel 3 also includes cable holders 29A and 29B positioned in the side wall of the securing channel. These cable holders can be used to hold an elongate conductive element, such as a cable, which can be used to transmit power and signals along the flooring system. One such arrangement is shown in Figures 8 and 9, where the cable holders 29A and 29B house electrical cables 31A and 31B respectively, which extend along the length of primary floor panel 3. The cables consist of a rectangular conductive metal core 33 retained within a wedge-shaped outer electrically insulating jacket 35 by lip 37. A portion 39 of the conductive core remains exposed within the securing channel, which allows terminals to form a direct electrical connection with the core. This is shown in Figure 9, where furniture is provided with electrical pins 41A and 41B which project into the securing channel and contact the exposed portions of cables 31A and 31B. In this arrangement, cable 31A is connected to a positive electrode and cable 31B is connected to a negative electrode, so that the furniture will only draw electrical power when both terminals 41A and 41B contact their respective cables. The shape of the cable holders, insulating jacket and conductive core ensure that these components do not rotate within the cable holders.

The primary floor panel also includes a central raised track 43 running along the length of the bottom of the securing rail. As shown in Figures 10 and 11, a wheel 45 on an item of furniture can be positioned within the securing so as to rest against raised track 43, and the item of furniture can be moved along the floor panel by rolling the wheel along the raised track. Advantageously, raised track 43 ensures that the wheel does not interfere with cables 31A and 31B retained in the cable holders. In this case, wheel 45 also includes integrally-formed side wheels 47A and 47B which contact overhanging lips 49A and 49B of the securing channel, to help to stabilise the wheel within the securing channel and spread the load supported by the wheel.

## Claims

1. A floor structure for use in a vehicle, comprising:
(i) a primary floor panel (3), having a top surface (10) extending to an edge of the floor panel; and
(ii) a platform floor panel (5,7), having a top surface which provides a platform (11) for supporting a secondary floor panel (15);
wherein the primary and platform floor panels include complementary engageable features (17A, 17B, 19A, 19B,23A,23B) which allows said edge of the primary floor panel to be connected to:
(a) an edge of a like primary floor panel; or
(b) an edge of the platform floor panel;
wherein the primary and platform floor panels are connected by said complementary engageable features such that the platform of the platform floor panel is relatively lower than the top surface at said edge of the primary floor panel;
**characterised in that** the floor structure further comprises
(iii) a secondary floor panel (15), placed on said platform of the platform floor panel such that the secondary floor panel lays flush with the top surface of the primary floor panel.

2. A floor structure according to claim 1, wherein the top surface of the platform floor panel (5,7) is stepped so as to have an upper section (9) and a relatively lower section (11), wherein the lower section extends continuously to an edge of the platform floor panel and provides the platform for supporting the secondary floor panel (15) so that it lays flush with the upper section of the top surface; and wherein the primary (3) and platform floor panels are connected edge-to-edge via said complementary engageable features (17A, 17B, 19A, 19B,23A,23B) such that the top surface of the primary floor panel and upper section of the platform floor panel are adjacent.

3. A floor structure according to claim 2, wherein the primary floor panel (3) and platform floor panel (5,7) are connected using said complementary engageable features (17A, 17B, 19A, 19B,23A,23B) so that the top surface (10) of the primary floor panel and upper section (9) of the platform floor panel are aligned.

4. A floor structure according to claim 2 or 3, wherein the upper (9) and lower (11) sections of the top surface of the platform floor panel (5,7) are connected by a connecting wall (13) which does not include any projecting regions.

5. A floor structure according to claim 4, wherein the upper (9) and lower (11) sections of the top surface of the platform floor panel (5,7) are connected by a flat connecting wall (13).

6. A floor structure according to any one of claims 2 to 5, wherein the complementary engageable features (17A,17B,19A,19B,23A,23B) are mechanical locking mechanism features, and the mechanical locking mechanism is provided on a side of the platform (11) having the upper section of the top surface.

7. A floor structure according to any one of claims 1 to 7, comprising an anchorage formation (25) for securing furniture to the floor structure, wherein the anchorage formation is provided on the top surface (10) of the primary floor panel (3).

8. A floor structure according to claim 7, wherein the anchorage formation (25) is an elongate securing rail or track.

9. A floor structure according to claim 8, wherein the securing rail or track is suitable for receiving an item of furniture such that the furniture can be moved along the rail/track and secured to the rail/track.

10. A floor structure according to claim 9, comprising a furniture conveyor (45), which an item of furniture can be placed on or attached to, and which is movable along at least a portion of the length of the securing rail/track, wherein the securing rail includes a securing channel (25), and the conveyor is positioned within the channel, and moveable along the channel.

11. A floor structure according to claim 9 or 10, comprising a cable holder (29A,29B) provided within the securing channel (25), for receiving a cable (31A,31B) for providing, in use, equipment in the vehicle with power and/or signals.

12. A vehicle comprising a floor structure according to any one of claims 1 to 11.

13. A flooring system for forming a floor structure according to any one of claims 1 to 11.

## Patentansprüche

1. Bodenstruktur zur Verwendung in einem Fahrzeug, umfassend:
(i) eine Primär-Bodenplatte (3), die eine Oberseitenfläche (10) aufweist, die sich zu einer Kante der Bodenplatte hin erstreckt; und
(ii) eine Plattformbodenplatte (5, 7), die eine Oberseitenfläche aufweist, die eine Plattform (11) zum Lagern einer Sekundär-Bodenplatte (15) bereitstellt;
wobei die Primär- und die Plattform-Bodenplatte komplementäre, in Eingriff bringbare Strukturelemente (17A, 17B, 19A, 19B, 23A, 23B) umfassen, wodurch die Kante der Primär-Bodenplatte mit Folgendem verbunden sein kann:
(a) einer Kante einer ähnlichen Primär-Bodenplatte; oder
(b) einer Kante der Plattformbodenplatte;
wobei die Primär- und die Plattform-Bodenplatte durch die komplementären, in Eingriff bringbaren Strukturelemente derart verbunden sind, dass die Plattform der Plattformbodenplatte relativ niedriger als die Oberseitenfläche an der Kante der Primär-Bodenplatte ist;
**dadurch gekennzeichnet, dass** die Bodenstruktur ferner Folgendes umfasst:
(iii) eine Sekundär-Bodenplatte (15), die auf der Plattform der Plattformbodenplatte derart positioniert ist, dass die Sekundär-Bodenplatte bündig mit der Oberseitenfläche der Primär-Bodenplatte abschließt.

2. Bodenstruktur gemäß Anspruch 1, wobei die Oberseitenfläche der Plattformbodenplatte (5, 7) derart gestuft ist, dass sie einen oberen Abschnitt (9) und einen relativ unteren Abschnitt (11) aufweist, wobei sich der untere Abschnitt kontinuierlich zu einer Kante der Plattformbodenplatte hin erstreckt und die Plattform zum Lagern der Sekundär-Bodenplatte (15) bereitstellt, sodass diese bündig mit dem oberen Abschnitt der Oberseitenfläche abschließt, und wobei die Primär- (3) und die Plattform-Bodenplatte über die komplementären, in Eingriff bringbaren Strukturelemente (17A, 17B, 19A, 19B, 23A, 23B) derart Kante an Kante miteinander verbunden sind, dass die Oberseitenfläche der Primär-Bodenplatte und der obere Abschnitt der Plattformbodenplatte aneinander angrenzend angeordnet sind.

3. Bodenstruktur nach Anspruch 2, wobei die Primär-Bodenplatte (3) und die Plattform-Bodenplatte (5, 7) durch Verwendung der komplementären, in Eingriff bringbaren Strukturelemente (17A, 17B, 19A, 19B, 23A, 23B) verbunden sind, sodass die Oberseitenfläche (10) der Primär-Bodenplatte und der obere Abschnitt (9) der Plattform-Bodenplatte fluchtend ausgerichtet sind.

4. Bodenstruktur gemäß Anspruch 2 oder 3, wobei der obere (9) und der untere (11) Abschnitt der Oberseitenfläche der Plattformbodenplatte (5, 7) durch eine Verbindungswand (13) verbunden sind, die keine vorstehenden Regionen umfasst.

5. Bodenstruktur gemäß Anspruch 4, wobei der obere (9) und der untere (11) Abschnitt der Oberseitenfläche der Plattformbodenplatte (5, 7) durch eine flache Verbindungswand (13) verbunden sind.

6. Bodenstruktur gemäß einem der Ansprüche 2 bis 5, wobei die komplementären, in Eingriff bringbaren Strukturelemente (17A, 17B, 19A, 19B, 23A, 23B) mechanische Verriegelungsmechanismusstrukturelemente sind, und der mechanische Verriegelungsmechanismus auf einer Seite der Plattform (11) bereitgestellt ist, die den oberen Abschnitt der Oberseitenfläche aufweist.

7. Bodenstruktur gemäß einem der Ansprüche 1 bis 7, umfassend eine Verankerungsformation (25) zum Befestigen der Innenausstattung an der Bodenstruktur, wobei die Verankerungsformation auf der Oberseitenfläche (10) der Primär-Bodenplatte (3) bereitgestellt ist.

8. Bodenstruktur gemäß Anspruch 7, wobei die Verankerungsformation (25) eine langgestreckte Befestigungs-Schiene oder-Bahn ist.

9. Bodenstruktur gemäß Anspruch 8, wobei die Befestigungs-Schiene oder -Bahn geeignet ist, ein Innenausstattungsteil aufzunehmen, sodass das Innenausstattungsteil entlang der Schiene/Bahn bewegt und an der Schiene/Bahn befestigt sein kann.

10. Bodenstruktur gemäß Anspruch 9, umfassend einen Innenausstattungsförderer (45), auf dem ein Innenausstattungsteil platziert oder angebracht sein kann, und der entlang von mindestens einem Abschnitt der Länge der Befestigungs-Schiene/-Bahn bewegbar ist, wobei die Befestigungsschiene einen Befestigungskanal (25) umfasst, und der Förderer innerhalb des Kanals positioniert und entlang des Kanals bewegbar ist.

11. Bodenstruktur gemäß Anspruch 9 oder 10, umfassend einen Kabelhalter (29A, 29B), der innerhalb des Befestigungskanals (25) zum Aufnehmen eines Kabels (31A, 31B) bereitgestellt ist, um in Verwendung den Einrichtungen im Fahrzeug Leistung und/oder Signale bereitzustellen.

12. Fahrzeug, umfassend eine Bodenstruktur gemäß einem der Ansprüche 1 bis 11.

13. Bodensystem zum Ausbilden einer Bodenstruktur gemäß einem der Ansprüche 1 bis 11.

## Revendications

1. Structure de plancher destinée à être utilisée dans un véhicule, comprenant :
(i) un panneau de plancher principal (3) ayant une surface supérieure (10) s'étendant vers un bord du panneau de plancher ; et
(ii) un panneau de plancher de plateforme (5, 7) ayant une surface supérieure qui fournit une plateforme (11) pour supporter un panneau de plancher secondaire (15) ;
dans laquelle les panneaux de plancher principal et de plateforme comprennent des caractéristiques pouvant se mettre en prise de manière complémentaire (17A, 17B, 19A, 19B, 23A, 23B) qui permettent audit bord du panneau de plancher principal d'être raccordé à :
(a) un bord d'un panneau de plancher principal ; ou bien
(b) un bord d'un panneau de plancher de plateforme ;
dans laquelle les panneaux de plancher principal et de plateforme sont raccordés par lesdites caractéristiques pouvant se mettre en prise de manière complémentaire de sorte que la plateforme du panneau de plancher de plateforme est relativement plus basse que la surface supérieure au niveau dudit bord du panneau de plancher principal ;
**caractérisée en ce que** la structure de plancher comprend en outre :
(iii) un panneau de plancher secondaire (15) placé sur ladite plateforme du panneau de plancher de plateforme de sorte que le panneau de plancher secondaire est de niveau avec la surface supérieure du panneau de plancher principal.

2. Structure de plancher selon la revendication 1, dans laquelle la surface supérieure du panneau de plancher de plateforme (5, 7) est étagée afin d'avoir une section supérieure (9) et une section relativement inférieure (11), dans laquelle la section inférieure s'étend de manière continue vers un bord du panneau de plancher de plateforme et fournit la plateforme pour supporter le panneau de plancher secondaire (15) de sorte qu'il est de niveau avec la section supérieure de la surface supérieure ; et dans laquelle les panneaux de plancher principal (3) et de plateforme sont raccordés bord à bord via lesdites caractéristiques pouvant se mettre en prise de manière complémentaire (17A, 17B, 19A, 19B, 23A, 23B) de sorte que la surface supérieure du panneau de plancher principal et la section supérieure du panneau de plancher de plateforme sont adjacentes.

3. Structure de plancher selon la revendication 2, dans laquelle le panneau de plancher principal (3) et le panneau de plancher de plateforme (5, 7) sont raccordés en utilisant lesdites caractéristiques pouvant se mettre en prise de manière complémentaire (17A, 17B, 19A, 19B, 23A, 23B) de sorte que la surface supérieure (10) du panneau de plancher principal et la section supérieure (9) du panneau de plancher de plateforme sont alignées.

4. Structure de plancher selon la revendication 2 ou 3, dans laquelle les sections supérieure (9) et inférieure (11) de la surface supérieure du panneau de plancher de plateforme (5, 7) sont raccordées par une paroi de raccordement (13) qui ne comprend pas de régions en saillie.

5. Structure de plancher selon la revendication 4, dans laquelle les sections supérieure (9) et inférieure (11) de la surface supérieure du panneau de plancher de plateforme (5, 7) sont raccordées par une paroi de raccordement plate (13).

6. Structure de plancher selon l'une quelconque des revendications 2 à 5, dans laquelle les caractéristiques pouvant se mettre en prise de manière complémentaire (17A, 17B, 19A, 19B, 23A, 23B) sont des caractéristiques de mécanisme de blocage mécanique et le mécanisme de blocage mécanique est prévu sur un côté de la plateforme (11) ayant la section supérieure de la surface supérieure.

7. Structure de plancher selon l'une quelconque des revendications 1 à 7, comprenant une formation d'ancrage (25) pour fixer une garniture sur la structure de plancher, dans lequel la formation d'ancrage est prévue sur la surface supérieure (10) du panneau de plancher principal (3).

8. Structure de plancher selon la revendication 7, dans laquelle la formation d'ancrage (25) est un rail ou chemin de fixation allongé.

9. Structure de plancher selon la revendication 8, dans laquelle le rail ou chemin de fixation est approprié pour recevoir une pièce de garniture de sorte que la garniture peut être déplacée le long du rail/chemin et fixé au rail/chemin.

10. Structure de plancher selon la revendication 9, comprenant un transporteur de garniture (45) dont une pièce de garniture peut être placée sur ce dernier ou fixée à ce dernier et qui est mobile le long d'au moins une partie de la longueur du rail/chemin de fixation, dans laquelle le rail de fixation comprend un canal de fixation (25) et le transporteur est positionné dans le canal, et mobile le long du canal.

11. Structure de plancher selon la revendication 9 ou 10, comprenant un support de câble (29A, 29B) prévu à l'intérieur du canal de fixation (25), pour recevoir un câble (31A, 31B) afin de fournir, à l'usage, à l'équipement dans le véhicule, de l'énergie et/ou des signaux.

12. Véhicule comprenant une structure de plancher selon l'une quelconque des revendications 1 à 11.

13. Système de plancher pour former une structure de plancher selon l'une quelconque des revendications 1 à 11.
